# FASCICULE DE BREVET EUROPEEN

(11) **EP 0 440 522 B1**
(45) Date de publication et mention de la délivrance du brevet: **27.07.1994**
(21) Numéro de dépôt: 91400135.9
(22) Date de dépôt: 22.01.1991
(51) Int. Cl.: B29C 67/14, B29D 31/00

(54) **Procédé de fabrication d'une structure sandwich, notamment pour la réalisation d'un corps creux**
Verfahren zur Herstellung einer Sandwichstruktur, insbesondere eines Hohlkörpers
Method for making a sandwich structure, in particular one of hollow body form

(30) Priorité: 30.01.1990 FR 9001076
(43) Date de publication de la demande: 07.08.1991
(73) Titulaire: SOCIETE DE CONSTRUCTION DES AVIONS HUREL-DUBOIS, F-92360 Meudon la Forêt (FR)
(72) Inventeur: Beauce, Gérard, F-92700 Colombes (FR); Quelvennec, Jean-Louis, F-78640 Saint Germain de la Grange (FR)
(74) Mandataire: Sauvage, Renée

(56) Documents cités:
- GB-A- 1 554 412
- US-A- 1 860 158
- US-A- 3 334 001
- US-A- 4 620 890
- US-A- 4 693 678

## Description

La présente invention concerne un procédé de fabrication d'une structure sandwich présentant la forme d'un corps creux ou d'une partie de corps creux, ladite structure étant constituée de deux peaux en matériau composite à base de fibres enrobées de résine, ces peaux étant solidarisées l'une à l'autre et écartées l'une de l'autre par une couche intermédiaire d'entretoisement, le contact entre la couche intermédiaire et les deux peaux étant discontinu.

De telles structures sandwich sont déjà utilisées, notamment en aéronautique et permettent d'obtenir des ensembles de grande résistance mécanique, légers et susceptibles de présenter, selon la nature des composants employés et de leur géométrie, d'autres caractéristiques, par exemple dans le domaine radio-électrique.

Ainsi, US-A-4 620 890 décrit un radome ayant une structure sandwich du type précité et un procédé de fabrication selon lequel :
- on constitue l'une des peaux, destinée à former la peau extérieure de la structure, de façon classique, par drapage de nappes de fibres enrobées de résine à l'intérieur d'un moule femelle, suivi d'une polymérisation avec application d'une pression ; et
- on fixe ensuite la couche intermédiaire d'entretoisement à l'intérieur de la peau extérieure précédemment constituée et à l'intérieur de la peau intérieure également précédemment constituée de la même manière que la peau extérieure.

La mise en oeuvre d'un tel procédé débouche sur une configuration tout à fait caractéristique, d'au moins l'une des peaux, à savoir la création de légères dépressions de la peau dans les zones qui ne sont pas en contact avec la couche intermédiaire, ce que les techniciens nomment l'effet "télégrafing". Il en résulte des variations d'écartement entre les deux peaux qui, dans certains cas d'utilisation des structures, constituent un défaut tout à fait inacceptable. C'est le cas, notamment, de structures exposées à des ondes radio-électriques, leur non-homogénéité risquant de pertuber l'émission ou la réception de ces ondes.

Le procédé de la présente invention a pour but de remédier à cet inconvénient afin d'obtenir une structure dont les peaux soient écartées d'une distance constante sur toute l'étendue de la structure.

Selon ce procédé, sur la face externe d'une forme mâle rigide et expansible, on drape des nappes de fibres enrobées de résine que l'on recouvre éventuellement d'une couche d'adhésif ; on introduit l'ensemble à l'intérieur de la couche intermédiaire tapissant la peau extérieure ; on provoque l'expansion de la forme rigide et expansible et on soumet les nappes de fibres qui la couvrent à une polymérisation en exerçant une pression qui assure également la solidarisation de la peau ainsi constituée avec la couche intermédiaire ; ensuite de quoi, on extrait la forme expansible.

Dans La présente demande, on entend par le terme générique de "nappe de fibres" tout ensemble dans lequel les fibres sont alignées ou non, tissées ou disposées selon toute autre configuration appropriée.

Les peaux étant constituées par un nappage de plusieurs nappes de fibres, on réalise, de préférence, la peau interne en deux phases, à savoir : dans un premier temps, on drape sur la forme expansible une partie seulement des nappes, et de préférence seulement deux nappes, afin de permettre l'expansion de la forme expansible ; et on procède à une prépolymérisation de cette première partie de la peau une fois la forme expansée ; et dans un deuxième temps, on drape le reste des nappes sur la forme expansible, on introduit l'ensemble à l'intérieur de la partie de peau déjà prépolymérisée et on procède à la polymérisation complète de l'ensemble.

La fixation de la couche d'entretoisement intermédiaire contre la face interne de la peau extérieure peut se faire éventuellement avec interposition d'un film adhésif.

Le procédé de l'invention peut s'appliquer à toute forme de structure non plane et tout particulièrement à des structures sandwich ayant la forme de corps creux de révolution.

On décrira à présent l'invention plus en détail en référence, aux dessins annexés dans lesquels :
- la figure 1 est une vue en coupe d'une structure sandwich obtenue par un procédé connu dans laquelle la peau interne présente un effet "télégrafing" ;
- la figure 2 est une vue en coupe d'une structure telle qu'on l'obtient avec le procédé de l'invention ; et
- les figures 3 à 10 représentent les diverses phases opératoires d'un exemple de mise en oeuvre du procédé de l'invention.

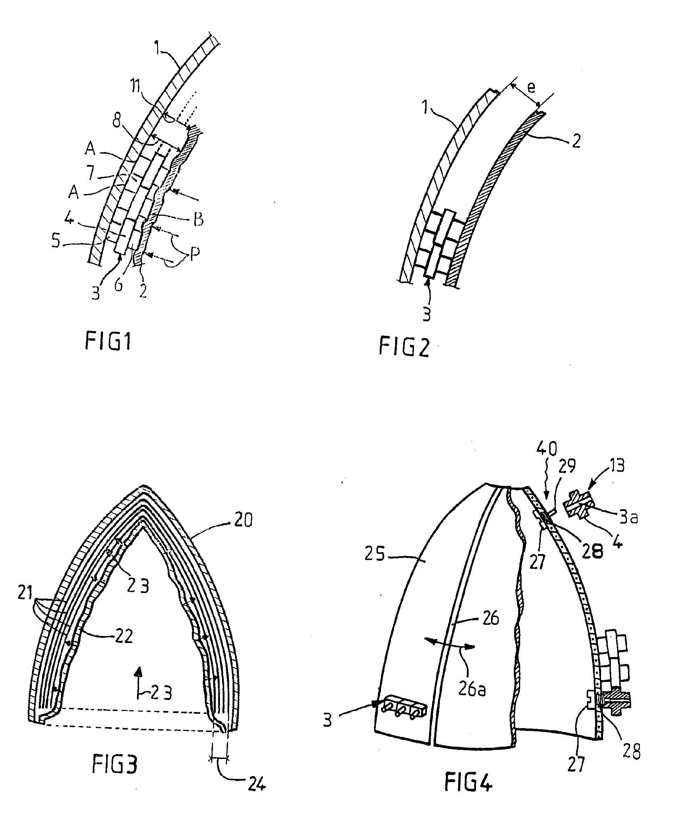

On décrira tout d'abord un procédé habituel pour l'obtention d'une structure sandwich comme celle de la figure 1, c'est-à-dire ayant la forme d'un corps creux ou d'une section de corps creux présentant une peau extérieure 1 et une peau intérieure 2 réalisées, toutes deux, à base de fibres (de Kevlar, de carbone ou de bore par exemple) enrobées de résine, par exemple une résine époxy, ces peaux étant séparées l'une de l'autre par une couche d'entretoisement intermédiaire désignée de façon générale en 3 qui est fixée de façon discontinue en des zones A et B respectivement aux peaux extérieure et intérieure. A titre d'exemple, sans que cela soit limitatif, la couche intermédiaire peut être formée d'une pluralité de pions présentant une partie médiane 4 de section carrée ou rectangulaire prolongée de part et d'autre par des saillies 5 et 6 de sections plus petites que la section de la partie médiane. Les pions sont placés côte à côte en contact par les flancs de leurs parties médianes 4. De la sorte, entre deux saillies 5 consécutives de pions voisins est réservé un espace vide 7.

Le procédé connu de fabrication de la structure consiste à réaliser tout d'abord la peau extérieure 1 par drapage de nappes de fibres enrobées de résine sur une forme et à polymériser la peau par passage en autoclave. On fixe ensuite la couche intermédiaire par ses saillies 5 sur la peau extérieure. On forme, enfin, la peau intérieure 2 par drapage de nappes en fibres enrobées de résine directement sur la couche intermédiaire 3 et on soumet la peau 2 à une opération de polymérisation en appliquant sur la peau 2 une pression P uniforme grâce, de façon classique, à une vessie souple qui épouse la forme générale de la couche intermédiaire 3. Mais du fait de la malléabilité des nappes constituant la peau 2, la pression P appliquée provoque, entre les saillies 6, une dépression de la peau 2 que l'on a représentée à la figure 1 ; c'est ce que l'on nomme l'effet "télégrafing". De ce fait, l'écartement entre les peaux 1 et 2 n'est pas régulier, l'écartement au droit des pions, représenté par la flèche 8, étant supérieur à l'écartement 11 dans les intervalles entre deux pions. Cette ondulation de la peau intérieure 2 est préjudiciable dans certaines utilisations de la structure sandwich où il est impératif d'obtenir entre les deux peaux un écartement "e" (voir figure 2) très régulier sans effet de dépression localisée de la peau. Le procédé de l'invention qui sera décrit à présent permet d'obtenir la structure sandwich représentée à la figure 2 qui, à titre d'exemple non limitatif, présente la forme d'un corps creux de révolution.

Selon le procédé de l'invention, on réalise (figure 3) la peau extérieure en drapant, à l'intérieur d'un moule femelle 20, une série de nappes 21 (par exemple quatre nappes) de fibres imprégnées de résine. On introduit ensuite, de façon conventionnelle, une vessie 22 dans le moule et on place l'ensemble en autoclave pour polymérisation sous pression 23.

Par ailleurs, on prépare une forme mâle rigide et expansible 25 (figure 4) ayant une configuration sensiblement identique à celle de la peau extérieure 24 obtenue à la figure 3. La forme 25 peut être réalisée par exemple en composite de fibres imprégnées de résine de faible épaisseur de façon à être indéformable et rigide.

Pour la rendre expansible, on peut pratiquer dans la forme une fente 26 s'étendant par exemple selon une génératrice. De la sorte, la forme possède la faculté de se dilater latéralement dans le sens de la flèche 26a. On garnit la surface extérieure de la forme de la couche intermédiaire 3 qui est constituée d'une pluralité de pions 13 montés côte à côte et enroulés en hélice autour de la forme. Ces pions, identiques à ceux de la figure 1, sont percés d'un canal central 3a. Leur maintien en place précise sur la forme 25 est obtenue par quelques vis placées judicieusement, par exemple à la base et au sommet de la forme 25. Ces vis 40 amovibles présentent une tête 27 située du côté intérieur de la forme pour permettre leur retrait, un corps fileté 28 vissé dans le taraudage pratiqué dans la forme, et un têton 28 dépassant du côté externe de la forme et sur lequel est destiné à être engagé un pion 13. Tous les pions sont orientés perpendiculairement à la forme et sont en contact les uns avec les autres par leur partie médiane 4.

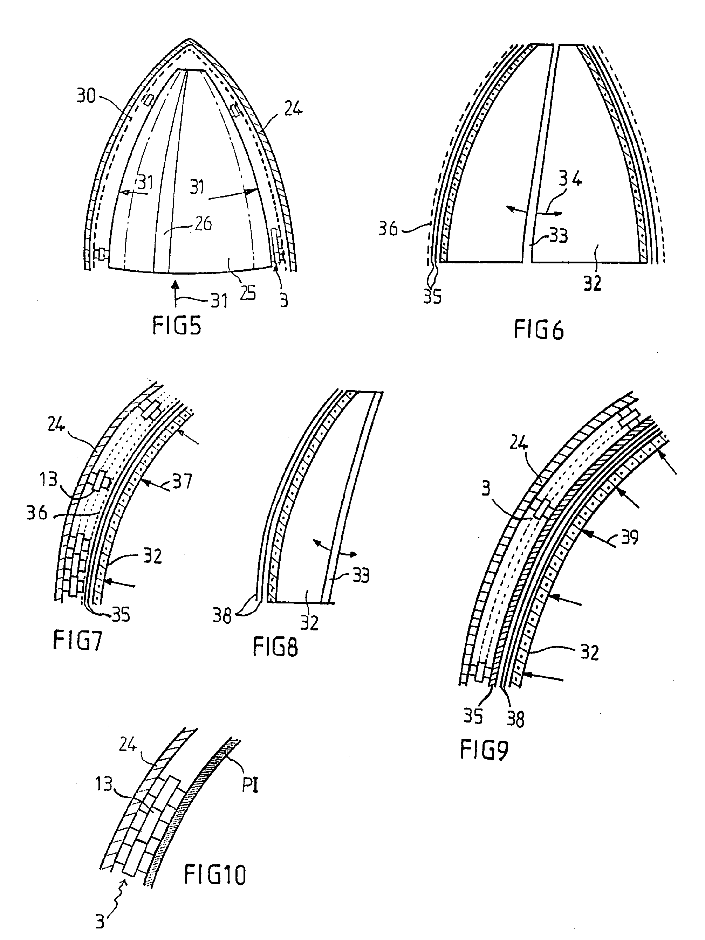

On enduit d'une couche d'adhésif 30 l'intérieur de la peau extérieure 24 (figure 5) puis on introduit à l'intérieur de celle-ci la forme 25 garnie de la couche intermédiaire de pions. On provoque l'expansion de la forme 25 grâce, par exemple, à la pression d'un fluide gazeux 31, de sorte que l'extrémité libre des pions 13 vient se solidariser avec la peau 24. On retire ensuite les vis 40 pour libérer les pions de la forme 25, on provoque la rétraction de celle-ci et on l'extrait de la peau extérieure.

Comme on le voit à la figure 6, sur une forme 32 sensiblement identique à la forme 25 (ou éventuellement sur la forme 25 elle-même si cela est possible), cette forme 32 étant rigide et expansible, selon la flèche 34, grâce à la fente 33, on drape des nappes de fibres enrobées de résine. De préférence, on limitera le nombre de nappes 35 à deux de telle façon qu'elles aient la possibilité de glisser l'une sur l'autre sans entraver l'expansion de la forme 32.

On revêt les nappes d'une couche d'adhésif 36 puis on introduit l'ensemble ainsi constitué à l'intérieur de la peau extérieure 24 garnie de la couche intermédiaire (figure 7). On provoque alors l'expansion de la forme 32 par l'action d'une pression 37 qui applique les nappes 35 contre les pions 13. On remarquera que, grâce à la rigidité de la forme 32, la pression 37 est répartie de façon très régulière et que par suite, les nappes 35 demeurent très tendues sans risquer de présenter des dépressions entre les pions. La couche d'adhésif 36 assure la solidarisation des pions et des nappes que l'on polymérise ensuite de façon classique. La partie de peau intérieure ainsi obtenue est rigide et parfaitement régulière.

Il suffit ensuite de compléter l'épaisseur de la peau intérieure en drapant (figure 8) le reste des nappes 38 sur la forme 32 préalablement extraite, ensuite de quoi on introduit cet ensemble à nouveau au contact de la partie 35 et on assure la polymérisation du reste de la peau par passage en autoclave et application d'une pression 39.

Le résultat montré à la figure 10 donne une peau intérieure PI sans aucun effet "télégrafing".

Naturellement, l'invention n'est pas limitée à l'exemple représenté et notamment, on pourrait utiliser une couche intermédiaire d'une autre configuration, par exemple des éléments en nid d'abeille sans pour autant sortir du cadre de l'invention.

## Revendications

1. Procédé de fabrication d'une structure sandwich ayant la forme d'un corps creux ou d'une section de corps creux et constitué de deux peaux (24, PI) en matériau composite à base de fibres enrobées de résine, les deux peaux étant solidarisées l'une à l'autre et écartées l'une de l'autre par une couche d'entretoisement (3) intermédiaire, le contact entre la couche intermédiaire (3) et les deux peaux (24, PI) étant discontinu, procédé selon lequel
- on constitue l'une des peaux (24), destinée à former la peau extérieure de la structure, de façon classique, par drapage de nappes (21) de fibres enrobées de résine à l'intérieur d'un moule femelle (20), suivi d'une polymérisation avec application d'une pression ;
- on fixe ensuite la couche intermédiaire d'entretoisement (3) à l'intérieur de la peau extérieure (24) précédemment constituée ;
caractérisé en ce que, sur la face externe d'une forme mâle (25) rigide et expansible, on drape des nappes de fibres enrobées de résine que l'on recouvre éventuellement d'adhésif (30), on introduit cet ensemble à l'intérieur de la peau extérieure (24) tapissée de la couche intermédiaire (3), on provoque l'expansion de la forme rigide et expansible (25, 32) pour que les nappes viennent au contact de la couche intermédiaire (3) et on soumet les nappes de fibres à polymérisation en exerçant une pression (37) qui assure la solidarisation de celles-ci avec la couche intermédiaire (3), ensuite de quoi on extrait la forme expansible (25, 32).

2. Procédé selon la revendication 1, caractérisé en ce que la fixation de la couche intermédiaire (3) dans la peau extérieure (24) est réalisée en disposant tout d'abord cette couche intermédiaire (3) sur la face extérieure d'une forme mâle (25) rigide mais expansible latéralement et en introduisant cette forme (25) garnie de la couche intermédiaire (3) à l'intérieur de la peau extérieure (24) après avoir interposé une couche d'adhésif (30) entre la couche intermédiaire (3) et la face interne de la peau extérieure (24), puis en provoquant l'expansion de la forme expansible (25) pour assurer La solidarisation de la couche intermédiaire (3) et de la peau extérieure (24).

3. Procédé selon la revendication 1, caractérisé en ce que la phase de réalisation de la peau interne (PI) de la structure est réalisée en deux temps, à savoir :
- dans un premier temps on drape sur la forme expansible (32) une partie seulement des nappes (35) devant constituer la peau intérieure (PI) afin de permettre l'expansion de la forme expansible (32) et l'on procède à une prépolymérisation de cette première partie de la peau ;
- dans un deuxième temps, on drape le reste des nappes (38) sur la forme expansible (32), on introduit l'ensemble à l'intérieur de la partie de peau déjà prépolymérisée et on procède à la polymérisation complète de l'ensemble.

4. Structure sandwich comportant une peau extérieure (24) et une peau intérieure (PI) séparées par une couche intermédiaire (3), réalisée selon le procédé de l'une quelconque des revendications 1 à 3, caractérisée en ce que l'écartement (e) entre lesdites peaux (24, PI) est constant en tous points de la structure.

5. Structure selon la revendication 4, caractérisée en ce que la couche intermédiaire (3) est constituée d'une pluralité de pions (13) présentant deux saillies (5, 6) situées de part et d'autre d'une partie médiane (4) de section plus grande que celle des saillies, les pions (13) étant en butée les uns contre les autres par leurs parties médianes (4) et étant fixés à chacune des peaux (24, PI) de la structure par l'extrémité de leurs saillies (5, 6), lesdites saillies s'étendant perpendiculairement aux peaux (24, PI).

6. Structure selon la revendication 4 ou 5, caractérisé en ce qu'elle a la forme d'un corps creux de révolution.

7. Forme rigide expansible pour la mise en oeuvre du procédé selon l'une quelconque des revendications 1 à 3, appliqué à la fabrication d'une structure sandwich selon la revendication 6, caractérisée en ce qu'elle est constituée d'un corps creux de révolution (25, 32) fendu (26, 33) sensiblement le long d'une génératrice.

8. Forme rigide expansible selon la revendication 7, caractérisée en ce qu'elle est réalisée en fibres enrobées de résine.

## Patentansprüche

1. Verfahren zur Herstellung einer Sandwichstruktur mit der Form eines Hohlkörpers oder eines Hohlkörperabschnitts, der aus zwei Häuten (24, PI) aus einem Verbundwerkstoff auf der Basis von in Harz eingebetteten Fasern besteht, wobei die beiden Häute durch eine Verstrebungszwischenschicht (3) miteinander fest verbunden und voneinander entfernt sind, wobei der Kontakt zwischen der Zwischenschicht (3) und den beiden Häuten (24, PI) unkontinuierlich ist, Verfahren, gemäß welchem
- eine der Häute (24), die dazu bestimmt ist, die Außenhaut der Struktur zu bilden, auf herkömmliche Weise durch Belegen des Inneren einer aufnehmenden Form (20) mit Schichten (21) von in Harz eingebetteten Fasern gebildet wird, worauf eine Polymerisierung unter Anwendung von Druck folgt, und
- anschließend die Verstrebungszwischenschicht (3) im Inneren der zuvor gebildeten Außenhaut befestigt wird, dadurch gekennzeichnet, daß die Außenseite einer starren und ausdehnbaren einsetzbaren Form (25) mit Schichten von in Harz eingebetteten Fasern belegt wird, die gegebenenfalls mit Klebstoff (30) beschichtet werden, diese Einheit in das Innere der mit der Zwischenschicht (3) belegten Außenhaut (24) eingeführt wird, die starre und ausdehnbare Form (25, 32) ausgedehnt wird, so daß die Faserschichten mit der Zwischenschicht (3) in Kontakt kommen, und die Faserschichten einer Polymerisation unterzogen werden, indem ein Druck (37) ausgeübt wird, der ihre feste Verbindung mit der Zwischenschicht (3) gewährleistet, worauf die ausdehnbare Form (25, 32) herausgenommen wird.

2. Verfahren nach Anspruch 1, dadurch gekennzeichnet, daß die Befestigung der Zwischenschicht (3) in der Außenhaut (24) vorgenommen wird, indem diese Zwischenschicht (3) zunächst auf die Außenseite einer starren, jedoch ausdehnbaren einsetzbaren Form (25) aufgebracht wird und diese mit der Zwischenschicht (3) belegte Form (25) in das Innere der Außenhaut (24) eingeführt wird, nachdem eine Klebstoffschicht (30) zwischen die Zwischenschicht (3) und die Innenseite der Außenhaut (24) eingebracht wurde, und indem dann die Ausdehnung der ausdehnbaren Form (25) bewirkt wird, um die feste Verbindung der Zwischenschicht (3) mit der Außenhaut (24) zu erreichen.

3. Verfahren nach Anspruch 1, dadurch gekennzeichnet, daß die Herstellung der Innenhaut (PI) der Struktur in zwei Arbeitsgängen vorgenommen wird, wobei
- in einem ersten Arbeitsgang die ausdehnbare Form (32) mit nur einem Teil der Schichten (35), die die Innenhaut (PI) bilden sollen, belegt wird, um die Ausdehnung der ausdehnbaren Form (32) zu gestatten, und eine Vorpolymerisierung dieses ersten Teils der Haut vorgenommen wird und
- in einem zweiten Arbeitsgang die ausdehnbare Form (32) mit den restlichen Schichten (38) belegt wird, die Einheit in das Innere des bereits vorpolymerisierten Hautteils eingeführt wird und die vollständige Polymerisierung der Einheit vorgenommen wird.

4. Sandwichstruktur, die aus einer Außenhaut (24) und einer Innenhaut (PI), die durch eine Zwischenschicht (3) getrennt sind, besteht und in dem Verfahren nach einem der Ansprüche 1 bis 3 hergestellt ist, dadurch gekennzeichnet, daß der Abstand (e) zwischen diesen Häuten (24, PI) an allen Punkten der Struktur konstant ist.

5. Struktur nach Anspruch 4, dadurch gekennzeichnet, daß die Zwischenschicht (3) aus einer Vielzahl von Klötzen (13) mit zwei Vorsprüngen (5, 6) besteht, die zu beiden Seiten eines Mittelteils (4) angeordnet sind, der einen größeren Querschnitt als die Vorsprünge hat, wobei die Klötze (13) mit ihren Mittelteilen (4) aneinanderstoßen und an jeder der Häute (24, PI) der Struktur mit dem Ende ihrer Vorsprünge (5, 6), die sich zu den Häuten (24, PI) senkrecht erstrecken, befestigt sind.

6. Struktur nach Anspruch 4 oder 5, dadurch gekennzeichnet, daß sie einen hohlen Rotationskörper bildet.

7. Starre ausdehnbare Form zur Durchführung des Verfahrens nach einem der Ansprüche 1 bis 3, das auf die Herstellung einer Sandwichstruktur nach Anspruch 6 angewendet ist, dadurch gekennzeichnet, daß sie aus einem hohlen Rotationskörper (25, 32) besteht, der im wesentlichen längs einer Mantellinie gespalten (26, 33) ist.

8. Starre ausdehnbare Form nach Anspruch 7, dadurch gekennzeichnet, daß sie aus in Harz eigebetteten Fasern besteht.

## Claims

1. Method of manufacturing a sandwich structure having the form of a hollow body or a hollow body section and formed of two skins (24, PI) made from a composite material comprising resin coated fibers, the two skins being secured together and separated from each other by an intermediate spacer layer (3), contact between the intermediate layer (3) and the two skins (24, PI) being discontinuous, method in which :
- one of the skins (24), forming the outer skin of the structure, is constructed in a conventional way, by draping layers (21) of resin coated fibers inside a female mold (20̸), followed by polymerization with application of a pressure ;
- then the intermediate spacer layer (3) is secured inside the previously formed outer layer (24);
characterized in that on the external face of a rigid and expandable male mold (25) are draped layers of resin coated fibers, which may possibly be covered with an adhesive layer (30̸), this assembly is introduced inside the outer skin (24) lined with the intermediate layer (3), the rigid and expandable mold (25, 32) is caused to expand so that the layers come into contact with the intermediate layer (3) and the fiber layers are subjected to polymerization while a pressure (37) is exerted which secures them to the intermediate layer (3), after which the expandable mold (25, 32) is removed.

2. Method according to claim 1, characterized in that the intermediate layer (3) is fixed in the outer skin (24) by disposing this intermediate layer (3) first of all on the outer face of a male mold (25) which is rigid but laterally expandable and introducing this mold (25) with the intermediate layer (3) inside the outer skin (24) after having inserted an adhesive layer (30̸) between the intermediate layer (3) and the inner face of the outer skin (24), then causing the expandable mold (25) to expand so as to secure the intermediate layer (3) and the outer skin (24) together.

3. Method according to claim 1, characterized in that the phase of forming the inner skin (PI) of the structure takes place in two steps, namely :
- in a first step, a part only of the fiber layers (35) forming the inner skin (PI) is draped on the expandable mold (32) so as to permit expansion of the expandable mold (32) and this first part of the skin is pre-polymerized;
- in a second step, the rest of the fiber layers (38) are draped on the expandable mold (32), the whole is introduced inside the skin portion already pre-polymerized and the assembly is then completely polymerized.

4. A sandwich structure having an outer skin (24) and an inner skin (PI) separated from each other by an intermediate layer (3), formed in accordance with the method according to anyone of claims 1 to 3, characterized in that the spacing (e) between the two skins (24, PI) is constant at all points of the structure.

5. A sandwich structure according to claim 4, characterized in that the intermediate layer (3) is formed of a plurality of studs (13) having two projections (5, 6) situated on each side of a median portion (4) having a cross section greater than that of the projections, the studs (13) abutting against each other by their median portions (4) and being fixed to each of the skins (24, PI) of the structure by the end of their projections (5, 6), said projections extending perpendicularly to the skins (24, PI).

6. Structure according to claim 4 or 5, characterized in that it has the form of a hollow body of revolution.

7. A rigid and expandable mold for implementing the method according to anyone of claims 1 to 3 applied to the manufacture of a sandwich structure according to claim 6, characterized in that it is constituted of a hollow body of revolution (25, 32) split (26, 33) substantially along a generatrix.

8. A rigid and expandable mold according to claim 7, characterized in that it is made from resin coated fibers.
